# EUROPEAN PATENT APPLICATION

(11) **EP 1 014 085 A1**
(43) Date of publication of application: **28.06.2000**
(21) Application number: 98941709.2
(22) Date of filing: 03.09.1998
(51) Int. Cl.: G01N 29/24, G01N 29/22

(54) **FOCUSING LONGITUDINAL WAVE ULTRASONIC PROBE FOR INSPECTING POLYMER MATERIAL AND ULTRASONIC DEFECT EVALUATION SYSTEM**

(30) Priority: 08.09.1997 JP 24229097; 31.10.1997 JP 30034897; 31.10.1997 JP 30034997; 25.12.1997 JP 35673697
(71) Applicant: Osaka Gas Company Limited, Osaka-shi, Osaka 541-0046 (JP)
(72) Inventor: KITAOKA, Toshimichi, Chuo-ku, Osaka-shi, Osaka 541-0046 (JP); INOUE, Fumio, Chuo-ku, Osaka-shi, Osaka 541-0046 (JP); TODA, Hiroki, Kobe-shi, Hyogo-ken 658-0003 (JP)
(74) Representative: Petersen, Frank, Dipl.-Ing.
(86) International application number: JP9803962
(87) International publication number: WO9913327

(57) **Abstract**

A focus type longitudinal wave ultrasonic probe for polymer material inspection comprising a curved piezoelectric element, and a matching material having an input end surface in close contact with a concave surface of said curved piezoelectric element, and an output end surface for fitting to a surface of a polymer material acting as a test object, wherein said matching material has acoustic impedance matched to acoustic impedance of said test object, or said matching material has acoustic impedance matched to acoustic impedance of said curved piezoelectric element, or both. A flaw evaluating apparatus for an ultrasonic flaw detecting apparatus having two gate circuits, and evaluating circuits connected thereto, respectively, in order to achieve an ultrasonic flaw detection taking complicated reflection echoes and sound velocity variations into account.

## Description

### TECHNICAL FIELD

This invention relates to a focus type longitudinal wave ultrasonic probe and an ultrasonic flaw evaluating apparatus for use in an ultrasonic flaw detection to perform a nondestructive inspection by transmitting ultrasonic wave to a test object such as a polymer material, and evaluating echoes reflected from flaws and the like.

### BACKGROUND ART

A polymer material and the like, generally, have a greater factor of sound wave attenuation than metal such as steel, and provide only detection signals of low S/N ratio when an ordinary ultrasonic probe is used. Lowering the frequency of ultrasonic beams to reduce a loss due to attenuation results in a deterioration in flaw resolution. For example, in an ultrasonic flaw detection of a joint between polymer pipes, typically crosslinked polyethylene resin pipes, which have begun to be used in town gas piping and hot water supply piping, and more particularly in an ultrasonic flaw detection of a fused interface formed between an inner peripheral surface of a fusion joint formed of a polyolefin resin (polyethylene or crosslinked polyethylene may be cited as a typical example thereof, and polybutene may also be used) having embedded therein a fusing wire wound helically about a joint axis, and outer peripheral surfaces of polyolefin resin pipes fused to the fusion joint, it is difficult to distinguish between a reflection echo from the wire and a flaw echo from a defectively fused interface or the like.

In order to overcome such a disadvantage, it is conceivable to use longitudinal waves having a smaller attenuation factor than transverse waves, and to employ a focus type longitudinal wave ultrasonic probe capable of injecting strong ultrasonic beams into the test object. Ultrasonic beams transmitted from the focus type longitudinal wave ultrasonic probe, since the beam diameter thereof is small in a focus region, achieve a flaw detection with excellent resolution. Thus, even where a flaw occurring region includes reflection sources which are not flaws, the small beam diameter allows a distinguishment to be made between the reflection sources whose positions are known beforehand, and a flaw, as long as the surface of the test object is scanned accurately with the focus type probe.

The focus type longitudinal wave ultrasonic probe includes a fixed focus type having a curved piezoelectric element acting as an ultrasonic transducer (or a plurality of piezoelectric element pieces arranged in a curve to form a curved piezoelectric element) to focus ultrasonic beams at a predetermined propagation distance, and an electronic focus type having a plurality of piezoelectric elements arranged in a scanning direction, each of which is oscillated with a slight delay to give directivity to ultrasonic beams to focus an ultrasonic beam composed thereof at a desired propagation distance. The electronic focus type has a complicated control circuit, and the probe itself is very precise and must be handled with care. This type is used chiefly for ultrasonic diagnostic apparatus in sites of medical treatment. The fixed focus type is used in material inspection and the like.

However, the fixed focus type probe has a matching material formed on a front surface of the curved piezoelectric element with a forward end surface of the matching material placed in contact with the surface of a test object. Ultrasonic waves excited by the curved piezoelectric element are transmitted through the matching material into the test object. In this case, a reflection of the ultrasonic waves occurs between the curved piezoelectric element and the matching material and between the matching material and the surface of the test object. Not only does this reflection bring about a loss of sound wave energy but a repetition of reflection echo obstructs a flaw detection.

One object of this invention is to reduce such a disadvantage from a focus type longitudinal wave ultrasonic probe which uses a curved piezoelectric element.

Another object of this invention is to provide an improved flaw evaluating apparatus for an ultrasonic flaw detecting apparatus used in an ultrasonic flaw detection of joints of polymer pipes as noted hereinbefore. That is, in order to evaluate a flaw existing in a test object, a conventional ultrasonic flaw detecting apparatus is constructed to select only an echo from the flaw by gating a region excluding a time base region with echoes occurring due to shapes of a test object such as a surface echo and a bottom echo. That is, a position and width of a flaw detecting gate are determined to satisfy a range of flaw detection, in time of scanning the test object with the ultrasonic probe, by a geometrical calculation based on positions of the ultrasonic probe. At this time, a gate circuit employs a surface echo synchronized gate mode to synchronize to the surface echo of the test object and to set a flaw detecting gate based thereon, or an excitation pulse synchronized gate mode to set a flaw detecting gate based on a synchronization signal the pulses for exciting ultrasonic waves, thereby to evaluate echoes returning from inside the test object constantly as flaw echoes. With such a flaw evaluating apparatus for an ultrasonic flaw detecting apparatus, where reflection sources which are not flaws exist in the test object an ultrasonic propagation time region of the reflection sources is removed from the flaw gate to exclude the echoes from the reflection sources from the flow echoes. In this case, it is impossible to detect flaws existing in the same ultrasonic propagation time region as the reflection sources.

In short another object of this invention here is to provide a flaw evaluating apparatus for covering a desired range of flaw detection even where reflection sources which are not flaws exist in a test object inspected by an ultrasonic flaw detecting apparatus.

### DISCLOSURE OF THE INVENTION

The object of this invention relating to a focus type longitudinal wave ultrasonic probe for polymer material inspection is fulfilled, according to this invention, by a focus type longitudinal wave ultrasonic probe for polymer material inspection comprising a curved piezoelectric element and a matching material having an input end surface in close contact with a concave surface of said curved piezoelectric element and an output end surface for fitting to a surface of a polymer material acting as a test object wherein said matching material has an acoustic impedance matched to an acoustic impedance of said test object. With this construction, by matching the acoustic impedance of the matching material and the acoustic impedance of the test object the reflection of ultrasonic wave at the boundary between the matching material and the surface of the test object may be suppressed. That is, an energy loss of the ultrasonic wave entering the test object from the matching material may be reduced. The flaw detection is carried out with a reduced chance of obstruction by repetition of reflection echoes. A flaw detection signal of excellent S/N ratio is obtained even in an inspection of a material with a high degree of ultrasonic attenuation.

The object of this invention relating to a focus type longitudinal wave ultrasonic probe for polymer material inspection is fulfilled, according to this invention, by a focus type longitudinal wave ultrasonic probe for polymer material inspection comprising a curved piezoelectric element, and a matching material having an input end surface in dose contact with a concave surface of said curved piezoelectric element and an output end surface for fitting to a surface of a polymer material acting as a test object, wherein said matching material has an acoustic impedance matched to an acoustic impedance of said curved piezoelectric element. With this construction, the characteristics of ultrasonic propagation from the curved piezoelectric element to the matching material are improved by matching the acoustic impedance of the matching material to the acoustic impedance of the curved piezoelectric element, As in the case of the foregoing ultrasonic probe, a flaw detection signal of excellent S/N ratio is obtained even in an inspection of a material with a high degree of ultrasonic attenuation.

A focus type longitudinal wave ultrasonic probe having the above two characterizing features, i.e. an ultrasonic probe in which the matching material has an acoustic impedance matched to the acoustic impedance of the test object, and the matching material has an acoustic impedance matched to the acoustic impedance of the curved piezoelectric element of course provides still more excellent inspection results.

However, a piezoelectric element used in the field of ultrasonic flaw detection, usually, is formed of a piezoelectric metallic oxide such as lead zirconate titanate, lead niobate or lithium niobate. A high level of skill is required to make a curved piezoelectric element for a fixed focus type probe. A piezoelectric metallic oxide has a relatively large acoustic impedance. Thus, rather than matching the acoustic impedance of the matching material to the acoustic impedance of the piezoelectric metallic oxide, it is desirable to combine it with a piezoelectric material having a less acoustic impedance.

Thus, in one preferred embodiment of this invention, the curved piezoelectric element is formed of a polymer piezoelectric material. With a highly elastic polymer material used as the curved piezoelectric element, the focus type longitudinal wave ultrasonic probe is made only by putting a sheet-like polymer material, with thin film electrodes applied thereto, in close contact with a convex end of the matching material acting as an ultrasonic propagation member. At this time, the acoustic impedance of the matching material may easily be assimilated to the acoustic impedance of the polymer piezoelectric element. Consequently sound wave reflection and sound field disturbance at the boundary surface are remarkably suppressed, compared with a metallic oxide and plastic. As a result though manufactured simply, it can excite a desirable ultrasonic pulse wave. A range of similarity in acoustic impedance between the matching material and polymer piezoelectric element is, herein, a range including differences in acoustic impedance therebetween which satisfy a condition that sound wave reflection and sound field disturbance occurring at the boundary therebetween do not affect a flaw detection requiring high resolution. It has been found through experiment that differences in acoustic impedance of about 1 - 3 times are adequate. Such differences in acoustic impedance are regarded as falling within the range of similarity between the acoustic impedance of the matching material and the acoustic impedance of said curved piezoelectric element in this invention. These differences may be said extremely small compared with the difference between a piezoelectric metallic oxide and plastic which generally is ten times or more.

In another preferred embodiment of this invention, the acoustic impedance of the matching material varies from a value matching the acoustic impedance of said curved piezoelectric element toward a value matching the acoustic impedance of said test object, with respect to a direction of propagation from said input end surface to the output end surface of a longitudinal ultrasonic wave launched by the curved piezoelectric element. With this construction, the characteristics of ultrasonic propagation from the piezoelectric element to the matching material are improved. In the boundary region between the matching material and the test object, the acoustic impedance of the matching material is similar to the acoustic impedance of the test object. Consequently, sound wave reflection and sound field disturbance at the boundary are suppressed, which provides a further advantage in flaw detection. The matching material having acoustic impedance variations may be realized by a centrifugal molding carried out while adding a metal powder of high acoustic impedance to a polymer material, or by stacking a plurality of polymer sheets different in acoustic impedance.

In a fixed focus type longitudinal wave ultrasonic probe, it is preferable to set a length of the matching material such that a longitudinal ultrasonic wave launched from the curved piezoelectric element converges at predetermined inspection point in the test object. However, since the fixed focus type probe has a fixed focal length determined by the curved shape of the piezoelectric element, a range for providing clear echoes of high resolution is limited. It is therefore necessary to manufacture a probe for each distance from the material surface to a flaw detection region. Where the test object has a curved surface as in the case of a pipe material, a probe must be manufactured which defines a contact surface matched to a surface curvature in order to secure an excellent contact between the probe and the test object. Thus, in order to inspect different types of pipe material, a considerable number of focus type probes are usually needed.

However, such a problem is solved by a preferred embodiment of this invention which is characterized in that the matching material is divided into a first matching material and a second matching material, the first matching material having one end surface thereof formed as the input end surface, and the other end surface formed as a first transition end surface, the second matching material having one end surface thereof formed as the output end surface, and the other end surface formed as a second transition end surface for close contact with the first transition end surface, the first transition end surface having an acoustic impedance matched to an acoustic impedance of the second transition end surface.

The matching material lying between the curved piezoelectric element and the test object is formed of two parts, i.e. the first matching material and second matching material. A focal paint formed in the test object is adjusted by the length of the second matching material. The acoustic impedances of the first transition end surface and second transition end surface, i.e. the acoustic impedances of the boundary region between the first matching material and second matching material, are assimilated, thereby to suppress also echoes occurring from the interface between the first matching material and second matching material. The statement that the first matching material and second matching material have an equal acoustic impedance should include a range for causing echoes to occur from the interface therebetween only to the extent of not affecting evaluation of a flaw echo. It is important that the acoustic impedances of the two are substantially the same with regard to ultrasonic flaw detection. By employing the first matching material and second matching material noted above, the focus type longitudinal wave ultrasonic probe of this invention requires only a different second matching material for each test object even where various test objects are inspected.

In a preferred embodiment of this invention, the second matching material is attachable to and detachable from the first matching material. Then, an optimal focus type longitudinal wave ultrasonic probe is completed only by selecting a best suited one from among a plurality of second matching materials made to suit various test objects, and attaching it to a single sub-assembly consisting of the curved piezoelectric element and the first matching material. Thus, the cost of inspection may be reduced dramatically compared with the prior art.

An important inspection using the focus type longitudinal wave ultrasonic probe of this invention is an ultrasonic inspection of a fused location of a polyolefin resin pipe EF (heat fused) joint. In this inspection, a fused part formed between an inner peripheral surface of the joint having a fusing wire mounted in the joint and wound helically in the axial direction, and outer peripheral surfaces of pipes fused to the fusion joint, is inspected by propagating ultrasonic beams to pass through gaps formed by the wire. Of course, the curved shape of the surface with which the probe is placed in contact and the depth to the wire, are different depending on the type of pipe. In a preferred embodiment of this invention for such an inspection, the first matching material and second matching material are formed of a polyolefin resin. As a result little reflection occurs at the boundary surface with the second matching material, sufficient ultrasonic energy may be injected into the test object, and the obstruction by boundary echoes becomes negligible. Typical examples of polyolefin resins are polyethylene and crosslinked polyethylene, and polybutene may also be used.

The object of this invention relating to a flaw evaluating apparatus for an ultrasonic flaw detecting apparatus is fulfilled, according to this invention, by a flaw evaluating apparatus comprising a first gate circuit for generating a first gate for an echo from a predetermined reflection source in said test object, a second gate circuit for generating a second gate for flaw detection in a position of a predetermined time delay from said first echo, a first evaluating circuit for determining that a flaw has been detected when an amplitude of said first echo exceeds a predetermined level, and a second evaluating circuit for determining that a flaw has been detected when an echo occurs at said second gate.

With this construction, the first gate is set to an ultrasonic propagation time region of echoes occurring from a reflection source which is not a flaw, and the second gate is set to other flaw detection regions. Of the echoes occurring to the first gate, only a signal of a level exceeding the strength of an echo usually occurring from a reflection source which is not a flaw is evaluated as indicating a flaw. An echo occurring to the second gate is evaluated as indicating a flaw. As a result a desired range of flaw detection may be covered, including regions having reflection sources which are not flaws.

Further, in a preferred embodiment of this invention, said second gate circuit is operable to vary an interval time between said first echo and said second gate following a variation in sound velocity in said test object. This embodiment provides an advantage of no longer requiring an imperative that sound velocity in the test object is fixed when gates are generated in the surface echo synchronized gate mode or excitation pulse synchronized gate mode noted hereinbefore. This is a great advantage in a flaw detection carried out after a heat process, such as fusion joining, of materials having a sound velocity greatly variable with heat. By varying the time of gate start and gate width with variations in sound velocity, a gate may be generated to correspond accurately to a desired region in the test object. For this purpose, the first gate circuit is operable to vary an interval time between a surface echo and the first gate following a variation in sound velocity in the test object, and the second gate circuit is operable to vary an interval time between the first echo and second gate following the variation in sound velocity in the test object.

For the gates to follow variations in sound velocity, a sound velocity at that point of time must be grasped. In a preferred embodiment of this invention, a variation in sound velocity in the test object is determined by measuring an interval time between echoes from two predetermined reflection sources in the test object e.g. a surface echo and a bottom echo. Take an ultrasonic inspection of a fused location of a polyolefin resin pipe EF (heat fused) joint, as a typical example of application of an ultrasonic flaw detecting apparatus having the flaw evaluating apparatus according to this invention. In this inspection, a fused part formed between an inner peripheral surface of the joint having a fusing wire mounted in the joint and wound helically in the axial direction, and outer peripheral surfaces of pipes fused to the fusing joint is inspected. The first gate may be set to a wire region, and the second gate to a fused surface region, to use an echo from the wire and an echo from an inner surface of the pipe as echoes from the predetermined reflection sources.

### BRIEF DESCRIPTION OF THE DRAWINGS

Fig. 1 is a sectional view taken in an axial direction of polyethylene pipes, showing an embodiment of a focus type longitudinal wave ultrasonic probe according to this invention in an ultrasonic inspection of a connecting state of a polyethylene pipe EF joint;
Fig. 2 is a sectional view taken in a circumferential direction of the polyethylene pipes, showing the embodiment of the focus type longitudinal wave ultrasonic probe of Fig. 1;
Fig. 3 is a measurement graph obtained by measuring a focusing state of the focus type longitudinal wave ultrasonic probe according to this invention;
Fig. 4 is a monitor screen view showing reflected waves occurring in time of the ultrasonic inspection of the connecting state of the polyethylene pipe EF joint using the focus type longitudinal wave ultrasonic probe according to this invention;
Fig. 5 is a sectional view showing a different embodiment of the focus type longitudinal wave ultrasonic probe according to this invention in an ultrasonic inspection of a connecting state of a polyethylene pipe EF joint;
Fig. 6 is a sectional view taken in an axial direction of polyethylene pipes, showing an embodiment of a focus type longitudinal wave ultrasonic probe having a short sub-body;
Fig. 7 is a block diagram of an ultrasonic flaw detecting apparatus having a flaw evaluating apparatus according to this invention used in an ultrasonic inspection of a connecting state of a polyethylene pipe EF joint;
Fig. 8 is a monitor screen showing a flaw echo detected by a first gate;
Fig. 9 is a monitor screen showing a flaw echo detected by a second gate;
Fig. 10 is a schematic view of a gate setting immediately after fusion; and
Fig. 11 is a schematic view of a gate setting several tens of minutes after fusion.

### BEST MODE FOR CARRYING OUT THE INVENTION

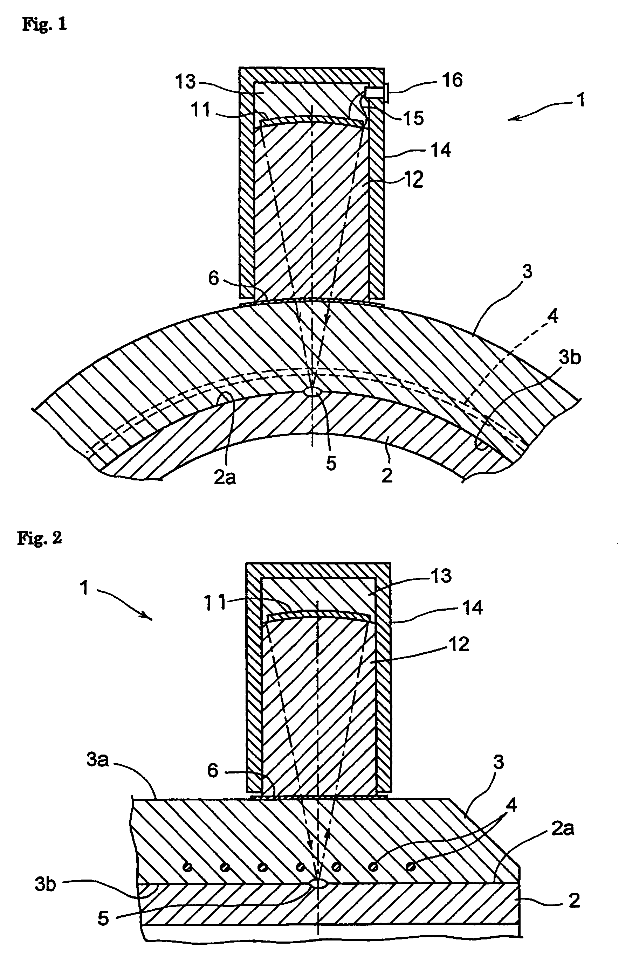

A first embodiment of this invention will be described hereinafter with reference to Figs. 1 and 2. Here, a focus type longitudinal wave ultrasonic probe 1 is used in an ultrasonic inspection of a connecting state of a polyethylene pipe EF joint 3 butt-joining two polyethylene pipes 2. Polyethylene is employed here as one material included in polyolefin resins. With this polyethylene pipe EF joint 3 mounted on the polyethylene pipes 2 in abutment, power is fed to a fusing wire 4 wound axially and helically in an inner wall to heat it and fuse adjacent regions, thereby fusing together inner wall surfaces 3b of polyethylene pipe EF joint 3 and outer wall surfaces 2a of polyethylene pipes 2, to achieve a strong sealed connection. In this fusing operation, an unfused part 5 occurs when, for example, sand, dust, dirt, water, muddy water or the like enters between the inner wall surfaces 3b of polyethylene pipe EF joint 3 and outer wall surfaces 2a of polyethylene pipes 2, The focus type longitudinal wave ultrasonic probe 1 is used to find such unfused part 5 from an outer wall surface 3a of polyethylene pipe EF joint 3.

As seen from Fig. 2, since the fusing wire 4 is wound helically in the direction of a pipe axis, it is important to inspect a fused region with ultrasonic beams having sound axis lines passing through gaps of fusing wire 4, so that echoes from the fusing wire 4 would not obstruct detection of an echo from the unfused part 5. That is, the inspection needs to be carried out with ultrasonic beams of high resolution. For this purpose, the focus type longitudinal wave ultrasonic probe 1 must focus from the fusing wire 4 between the fused region.

This focus type longitudinal wave ultrasonic probe 1 includes a curved piezoelectric element 11 backed by a damper material 13, a matching material 12 in close contact with a front surface or concave surface of piezoelectric element 11, and a cup-like main case 14 housing these integrated components. As a material of piezoelectric element 11, a polymer piezoelectric film is selected according to specifications, typical examples of which include polydifluoroethylene (polyvinylidene fluoride: PVDF), P (VDF-TrFE) (copolymer of vinylidene fluoride and trifluorochloroethylene) and P (VDF-TeFE) (copolymer of vinylidene fluoride and tetrafluoroethylene). This is applied tight to a convex surface of matching material 12 designed according to a desired focal length, to function as a curved piezoelectric element. Though not shown in the drawings, thin film electrodes are formed on opposite surfaces of such a piezoelectric element. These electrodes are connected through electric wires 15 to a connector 16 attached to the main case 14. This connector 16 is connected through a high frequency cable to a connector of an ultrasonic flaw defector having a high frequency oscillator, an amplifier, a signal evaluating unit and a monitor. Thus, the focus type longitudinal wave ultrasonic probe 1 acts as an ultrasonic transmitter/receiver for ultrasonic flaw detection. The matching material 12 is formed of polyethylene which is the same material as the test object, and a surface thereof remote from the piezoelectric element 11 is recessed to fit to the outer wall surface 3a of polyethylene pipe EF joint 3. Consequently, excellent adhesion is secured only by applying a thin coupling agent 6 between the matching material 12 and the outer wall surface 3a. This focus type longitudinal wave ultrasonic probe 1 has a focal length variable as desired by varying the length of matching material 12.

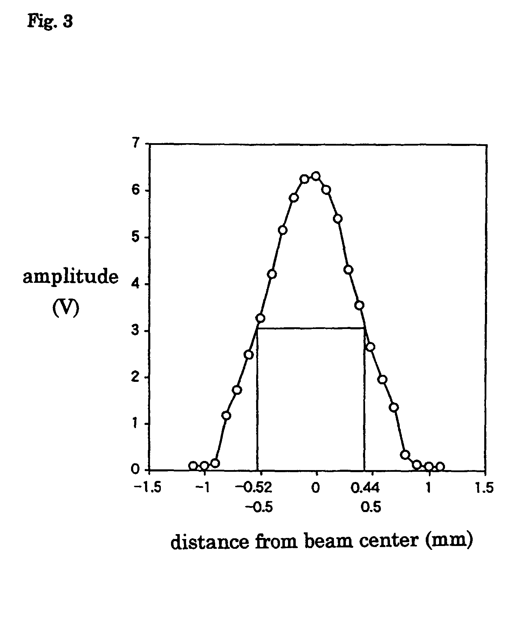

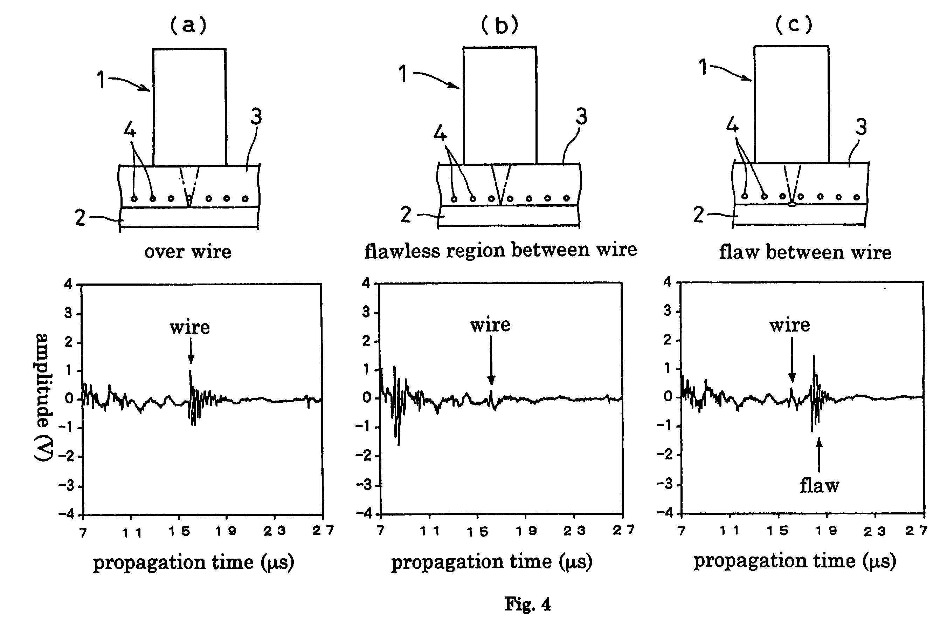

The piezoelectric element 11 used here has an acoustic impedance of 2.1 × 10⁶kg/s·m². The matching material 12 formed of polyethylene has an acoustic impedance of 4.5 × 10⁶kg/s·m². Considering the acoustic impedance of a metallic oxide piezoelectric element of 30 × 10⁶kg/s·m² or higher, it can be said that the acoustic impedances of polymer piezoelectric element 11 and matching material 12 are similar. Fig. 3 shows a sound pressure state of this focus type longitudinal wave ultrasonic probe 1 measured by immersion testing (aiming at a blade of 0.34mm in thickness), which proves that an excellent focus level is secured. Further, Fig. 4 shows positions of probe 1 relative to a test piece for inspecting a connecting state of the above-mentioned polyethylene pipe EF joint 3, and echoes displayed on a monitor. This test piece has an unfused part artificially formed in a joining portion disposed inwardly of the wire 4 of polyethylene pipe EF joint 3. By moving, in the direction of the pipe axis, the probe 1 in an excellent focus condition according to this invention, echoes from the wire 4 should occur with rises and falls adjacent a position of 16 µsec propagation time, and echoes of the artificial flaw (location of defective joint) adjacent a position of 18 µsec propagation time. According to the results of experiment, as shown in Fig. 4, the echoes from the fusing wire 4 are displayed when the probe 1 is placed over the fusing wire 4 (Fig. 4 (a)), the echoes from the fusing wire 4 diminish when the probe 1 is placed over a gap of fusing wire 4 (Fig. 4(b)), and the echoes from the artificial flaw are reliably detected through a gap of fusing wire 4 (Fig. 4(c)). This proves that this focus type longitudinal wave ultrasonic probe 1 is effective for inspection of a connecting state of the polyethylene pipe EF joint 3. In an actual flaw detection, a defective joint may be inspected for the EF joint 3 of the same size by scanning the entire area of the circumferential surface with a gate set between 17 µsec and 20 µsec. In the monitor displays in Fig. 4, the vertical axis represents ultrasonic amplitude (voltage) while the horizontal axis represents ultrasonic propagation time. For expediency of illustration, the propagation time is shown covering only a region of 7 µsec to 27 µsec, with a substantial region for flaw detection located in the center.

There occurs no problem where the test object and matching material 12 are formed of the same material. Where the test object and matching material 12 are formed of different materials which are greatly different in acoustic impedance, the matching material 12 may be formed of a material with gradient acoustic impedance characteristics to approach the acoustic impedance of the test object from the acoustic impedance of polymer piezoelectric element 11, which is advantageous for flaw inspection since boundary echoes are reduced at the boundary with the test object. Manufacture of the matching material having acoustic impedance variations is selected based on a material used. What is proposed is a method of centrifugal molding carried out while adding a metal powder of high acoustic impedance to a polymer material, or a method of stacking a plurality of polymer sheets different in acoustic impedance.

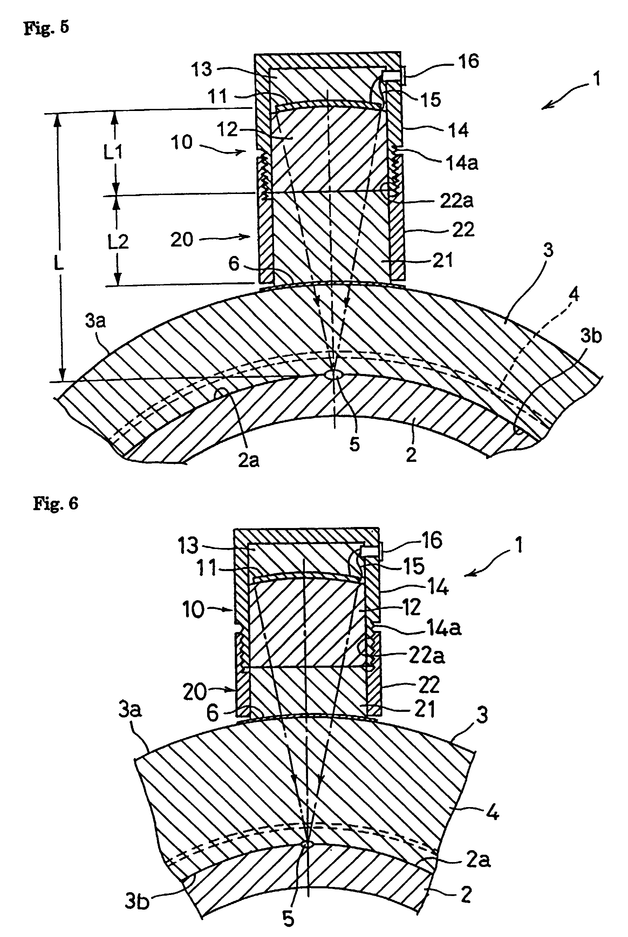

A second embodiment of this invention will be described with reference to Fig. 5.

This focus type longitudinal wave ultrasonic probe 1 includes a main body 10, and a sub-body 20 selectively changeably connected to the main body 10. That is, the sub-body 20 is detachably attached to a lower portion of the probe in the preceding embodiment. A matching material 12 here is divided into a first member 12 mounted in the main body 10 and a second member 21 mounted in the sub-body 20.

The main body 10 includes a curved piezoelectric element 11 backed by a damper material 13, a first matching material 12 in close contact with a front surface or concave surface of piezoelectric element 11, and a cup-like main case 14 housing these integrated components. Thin film electrodes, not shown, formed on the piezoelectric element 11 are connected through electric wires 15 to a connector 16 attached to the main case 14. The first member 12, also here, is formed of polyethylene which is the same material as the test object, and a surface thereof remote from the piezoelectric element 11 is finished precisely flat and slightly protrudes from an end surface of the main case 14.

The sub-body 20 includes the second member 21, and a sub-case 22 surrounding the second member 21. The second member 21 also is formed of polyethylene which is the same as the first member 12, and a surface thereof in close contact with the first member 12 is finished precisely flat while the other surface is recessed to fit to the outer wall surface 3a of polyethylene pipe EF joint 3 acting as a scan surface. A female screw 22a formed on an inner wall surface of sub-case 22 is meshed with a male screw 14a formed on an outer wall surface of main case 14, to integrate the main case 14 and sub-case 22, with the first member 12 and second member 21 placed in end-to-end contact with each other. At this time, an ultrasonic, acoustic close contact is secured by applying a coupling agent such as glycerin to the mutual contact surfaces.

The focus type longitudinal wave ultrasonic probe 1 is completed by assembling the sub-case 22 to the main case 14, and has a focal length variable as desired by varying the length of the second member 21 in the sub-body 20. That is, as seen from Fig. 5, the first matching material 12 has a fixed axial length: L1, the second matching material 21 has an axial length: L2 variable with the sub-body 20 to be selected, and the piezoelectric element 11 has a focal length: L determined by the shape of the curved surface. Consequently, a focal point may be set to a fused region of the polyethylene pipe EF joint 3 by selecting a sub-body 20 with a second matching material 21 having an appropriate length: L2. In selecting the sub-body 20, it is also important to select one that has the surface, opposed to the test object, of the second member 21 fitting to the outer wall surface 3a of polyethylene pipe EF joint 3. Consequently, excellent adhesion is secured only by applying a thin coupling agent 6 between the second member 21 and the outer wall surface 3a. The focus type longitudinal wave ultrasonic probe 1 shown in Fig. 6 has a short sub-body 20 attached.

As is clear from from the above description, with the focus type longitudinal wave ultrasonic probe 1 in this embodiment it is important that the first member 12 and second member 21 act for matching of the focal length, and also for matching of the acoustic impedance to avoid boundary echoes occurring at the boundary therebetween which would obstruct determination of a flaw.

In the description of the foregoing embodiments, a polymer piezoelectric film is used as the piezoelectric element 11. Instead, a piezoelectric metallic oxide such as lead zirconate titanate, lead niobate or lithium niobate may be employed. The first important point of this invention is that, in the focus type longitudinal wave ultrasonic probe 1, the piezoelectric element 11, matching material and test object 3 have appropriately selected acoustic impendances. Further, the above piezoelectric element 11 has a spherical, curved shape, which is known as the point focus type. This may be replaced with the line focus type having a cylindrical, curved shape which also falls within the scope of this invention.

Next, a flaw evaluating apparatus for the ultrasonic flaw detecting apparatus in an ultrasonic flaw detection using the above focus type longitudinal wave ultrasonic probe 1 will be described.

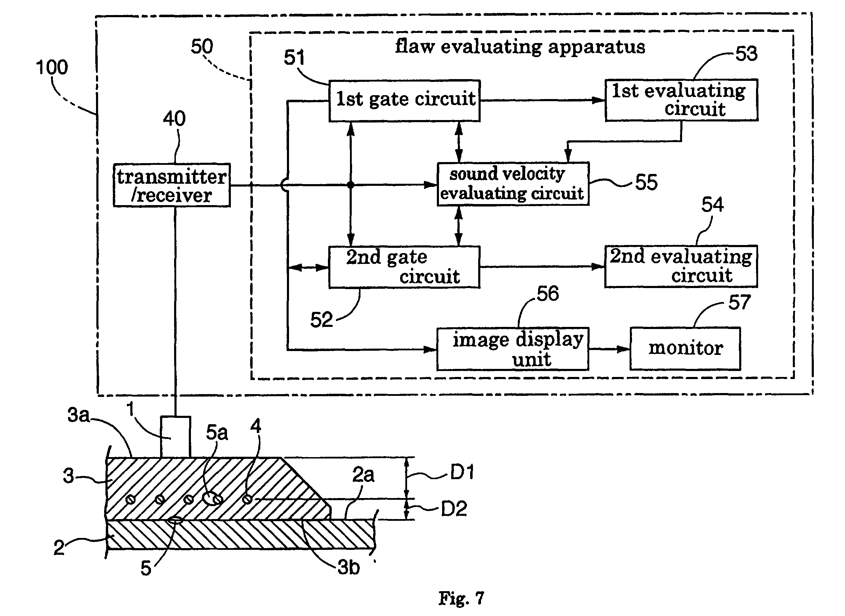

Fig. 7 is a block diagram of an ultrasonic flaw detecting apparatus 100 having a flaw evaluating apparatus 50 according to this invention. The ultrasonic flaw detecting apparatus 100 transmits ultrasonic waves to a test object through the ultrasonic probe 1, and evaluates returning echoes. Here, the apparatus is used in an ultrasonic inspection of a connecting state of a polyethylene pipe EF (heat fused) joint 3 butt-joining two polyethylene pipes 2. With this polyethylene pipe EF joint 3 mounted on the polyethylene pipes 2 in abutment, power is fed to a fusing wire 4 wound axially and helically in an inner wall to heat it and fuse adjacent regions, thereby fusing together inner wall surfaces 3b of polyethylene pipe EF joint 3 and outer wall surfaces 2a of polyethylene pipes 2, to achieve a strong sealed connection. In this fusing operation, an unfused part 5 occurs when, for example, sand, dust, dirt, water, muddy water or the like enters between the inner wall surfaces 3b of polyethylene pipe EF joint 3 and outer wall surfaces 2a of polyethylene pipes 2, The focus type longitudinal wave ultrasonic probe 1 is used to find such unfused part 5 from an outer wall surface 3a of polyethylene pipe EF joint 3. Since the fusing wire 4 is wound helically in the direction of a pipe axis, echoes occur from the fusing wire 4 when the fusing wire 4 lies on ultrasonic beams from the ultrasonic probe 1. When the unfused part 5 lies on the ultrasonic beams from the ultrasonic probe 1, echoes from the unfused part 5 are of course detected as flaw echoes. Further, echoes from a void 5a formed adjacent the fusing wire 4 as a result for example, of heating of water or muddy water having entered between the inner wall surface 3b and outer wall surface 2a as noted above occur as overlapping the echoes from the fusing wire 4.

In order to detect and evaluate the above flaw echoes reliably, the flaw evaluating apparatus 50 includes a first gate circuit 51 and second gate circuit 52, a first evaluating circuit 53 and second evaluating circuit 54, and further a sound velocity evaluating circuit 55 for evaluating a sound velocity of polyethylene pipe EF joint 3 which is the test object. As seen from Fig. 7, a first gate 31 generated by the first gate circuit 51 and a second gate 32 generated by the second gate circuit 52 are displayed by an image display unit 56 on a monitor 57 along with echoes occurring as the case may be. Echoes from the fusing wire 4 and echoes from the void 5a are detected by the first gate 31, and echoes from the unfused part 5 by the second gate 32.

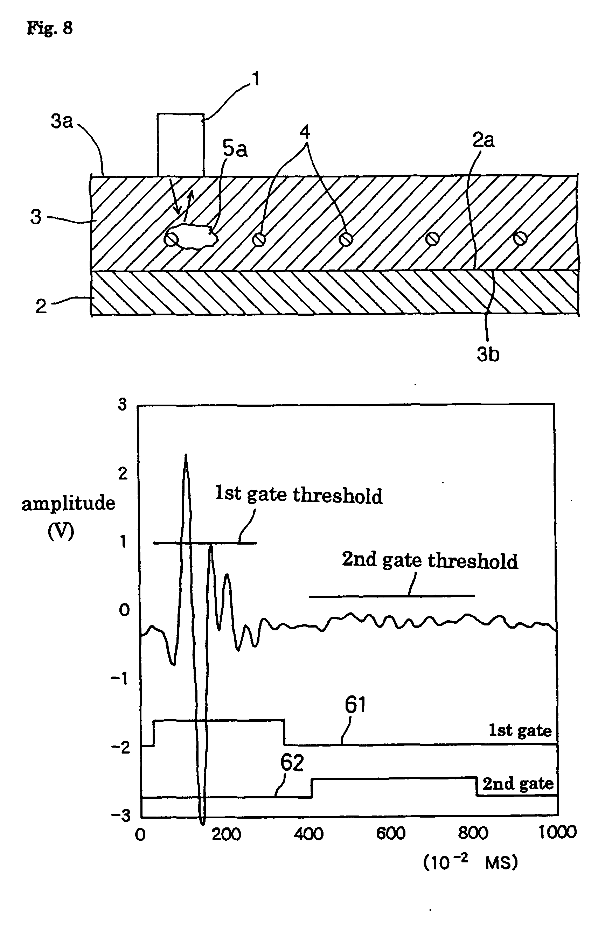

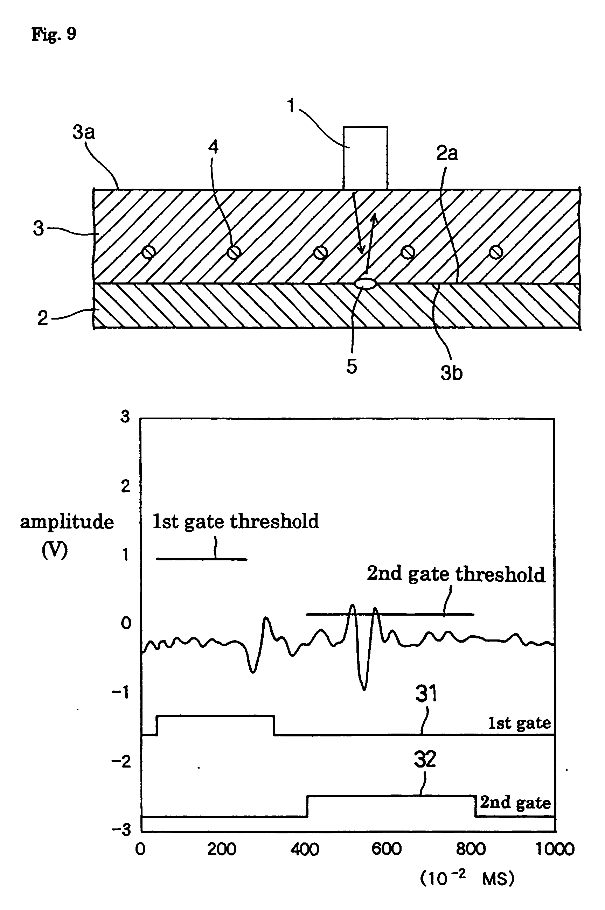

The echoes detected by the first gate 31 are transmitted as electric signals to the first evaluating circuit 53, and compared with a predetermined threshold to determine whether they are flaw echoes from the void 5a formed adjacent the fusing wire 4 as a result, for example; of heating of water or muddy water having entered between the inner wall surface 3b and outer wall surface 2a. That is, since the echoes returning after being directly reflected from the fusing wire 4 have an amplitude that can be guessed beforehand, echoes exceeding it are determined to be flaw echoes. The echoes detected by the second gate 32 are transmitted as electric signals to the second evaluating circuit 54. These echoes, when they have an amplitude exceeding a predetermined threshold, are determined to be flaw echoes indicating an unfused flaw. To illustrate this, Fig. 8 shows a monitor screen displaying the flaw echoes detected by the first gate 31, and a scanning position of ultrasonic probe 1 at this time. Fig. 9 shows a monitor screen displaying the flaw echoes detected by the second gate 32, and a scanning position of ultrasonic probe 1 at this time. Here, point 0 on the horizontal axis or ultrasonic propagation time axis does not correspond to a transmission pulse position, but to an appropriate position selected for easiness in viewing the monitor screen.

Setting of the gates is important in evaluating the echoes detected by the gates as noted above. Normally the gates are set to a time axis region corresponding to a flaw occurring region in a test object. This is done on the condition that sound velocity in the test object is constant. In the ultrasonic inspection of the connecting state of polyethylene pipe EF joint 3 taken for example here, the inspection is performed immediately after thermal fusion takes place. Material temperature varies every moment throughout an inspecting operation, resulting in variations in the sound velocity. It is therefore necessary to vary gate positions following the variations in the sound velocity in order to obtain accurate gate positions.

Next, a gate setting operation of flaw evaluating apparatus 50 in this invention will be described.

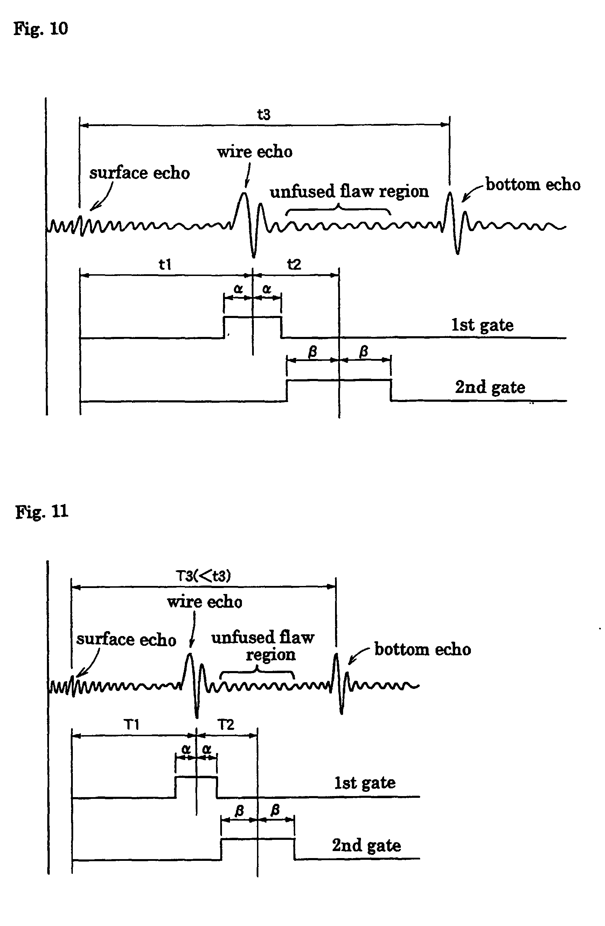

When the ultrasonic probe 1 scans the outer wall surface 3a of polyethylene pipe EF joint 3 and injects an ultrasonic wave, an echo from the fusing wire 4 present at a distance: D1 from the outer wall surface 3a occurs in a position at a time: t1 from a surface echo. First, to this region the first gate 31 is set with a duration 2α from t1-α to t1+α. Further, an unfused flaw region is present between the inner wall surface 3b of polyethylene pipe EF joint 3 and the outer wall surface 2a of polyethylene pipe 2, at a distance: D2 from the fusing wire 4. The second gate 32 is set with a duration 2β from t1+t2-β to t1+t2+β. In the absence of a distinct surface echo, a dummy surface echo position may be determined from a transmitted pulse to serve as a reference for the gate setting. Fig 10 schematically shows a way in which these gates are set.

At the same time, the sound velocity evaluating circuit 52 detects the surface echo reflected from the outer wall surface 3a of polyethylene pipe EF joint 3, and a so-called bottom echo reflected from the inner wall surface 2b of polyethylene pipe 2, and measures time t3 therebetween. This time is in inverse proportion to a variation in sound velocity in the test object which enables an immediate evaluation of the sound velocity variation. Temperature falls several tens of minutes after thermal fusion, and the sound velocity in the polyethylene pipe 2 and polyethylene pipe EF joint 3 increases again. Fig. 11 schematically shows a way in which the first gate 31 and second gate 32 are changed following the above. It has been confirmed through experiment that, in the case of the test object discussed herein, i.e. the polyethylene pipes 2 and polyethylene pipe EF joint 3, a wire echo occuring at a temperature immediately after the fusion is delayed by approximately 5µs from a wire echo occurring at normal temperature.

As sound velocity (time interval) varies with reference to the sound velocity at the point of time when the first gate 31 and second gate 32 are set first (which corresponds to the time interval: t3 between the surface echo and bottom echo shown in Fig. 10), the positions of the first gate 31 and second gate 32 are changed according to the variation (t3-T3 )/t3, to positions at time intervals T1 and T2, respectively, following the sound velocity variation. Thus, even when the time positions of the wire echo and flaw echo are shifted by temperature variations, the flaw echo may be detected reliably since the gates 31 and 32 also follow them. Here, the gate widths: 2α and 2β are fixed. In the event of a large sound velocity difference due to a temperature variation and where setting of the gate widths with increased precision is required, the gate widths may also be varied following a sound velocity variation.

In the ultrasonic inspection of the connecting state of polyethylene pipe EF (heat fused) joint 3 butt-joining polyethylene pipes 2 shown in Fig. 7, the temperature gradient in the test object is considerably peculiar, that is the temperature difference increases the farther away from the wire 4 acting as heat source since the heat conduction of polyethylene is slow. This results in a phenomenon that regions around the fusing wire 4 are hot, and the temperature falls sharply the farther away inwardly and outwardly therefrom. This temperature difference is canceled with passage of time. However, where the temperature gradient in the test object, and hence the difference in sound velocity in the test object, is large in time of flaw detection, it is important to check the sound velocity adjacent a flaw detection region. In this example, it is preferable to effect a further correction in the gate setting based on results of average sound velocity measurement based on the surface echo and bottom echo. For example, the gates may be set based on results of average sound velocity measurement based on the wire echo and bottom echo. Further, when a temperature variation between the fusing wire 4 and the unfused flaw region is greater to a significant extent than an average temperature variation in the region where the wire echo and bottom echo are generated, the position of second gate 32 and, where necessary, the gate width may be further corrected with a correction factor derived empirically.

In the foregoing description of the embodiments, an ultrasonic inspection of a connecting state of polyethylene pipe EF (heat fused) joint 3 butt-joining polyethylene pipes 2 has been discussed, where sound velocity in the test object is variable during the ultrasonic flaw detection. The flaw evaluating apparatus for an ultrasonic flaw detecting apparatus according to this invention of course has wide application including an ultrasonic inspection of a connecting state of a thermally fusible joint of similar pipes formed of a polyolefin resin other than polyethylene, and an ultrasonic flaw detection of different test objects where sound velocity variations take place during an inspection.

### INDUSTRIAL UTILITY

A focus type longitudinal wave ultrasonic probe according to this invention is suited for use in an inspection of a connecting state of a thermally fusible joint of polyolefin resin pipes or the like which generally have a higher sound wave attenuation rate than metal such as steel, and from which only detection signals of low S/N ratio can be obtained by use of an ordinary ultrasonic probe. Similarly, a flaw evaluating apparatus for an ultrasonic flaw detecting apparatus according to this invention is particularly suited for use in an inspection of a connecting state of a thermally fusible joint which requires complicated reflection echoes and sound velocity variations to be taken into account.

## Claims

1. A focus type longitudinal wave ultrasonic probe for polymer material inspection comprising a curved piezoelectric element, and a matching material having an input end surface in close contact with a concave surface of said curved piezoelectric element and an output end surface for fitting to a surface of a polymer material acting as a test object;
characterized in that said matching material has an acoustic impedance matched to an acoustic impedance of said test object.

2. A focus type longitudinal wave ultrasonic probe for polymer material inspection comprising a curved piezoelectric element and a matching material having an input end surface in dose contact with a concave surface of said curved piezoelectric element and an output end surface for fitting to a surface of a polymer material acting as a test object;
characterized in that said matching material has an acoustic impedance matched to an acoustic impedance of said curved piezoelectric element.

3. A focus type longitudinal wave ultrasonic probe for polymer material inspection as defined in claim 1, comprising a curved piezoelectric element and a matching material having an input end surface in close contact with a concave surface of said curved piezoelectric element and an output end surface for fitting to a surface of a polymer material acting as a test object;
characterized in that said matching material has an acoustic impedance matched to an acoustic impedance of said test object; and
said matching material has an acoustic impedance matched to an acoustic impedance of said curved piezoelectric element.

4. A focus type longitudinal wave ultrasonic probe for polymer material inspection as defined in an one of claims 1 - 3, characterized in that said curved piezoelectric element comprises a polymer piezoelectric material.

5. A focus type longitudinal wave ultrasonic probe for polymer material inspection as defined in any one of claims 1 - 4, characterized in that the acoustic impedance of said matching material varies from a value matching the acoustic impedance of said curved piezoelectric element toward a value matching the acoustic impedance of said test object, with respect to a direction of propagation from said input end surface to the output end surface of a longitudinal ultrasonic wave launched by said curved piezoelectric element

6. A focus type longitudinal wave ultrasonic probe for polymer material inspection as defined in any one of claims 1 - 5 characterized in that said matching material is divided into a first matching material and a second matching material, said first matching material having one end surface thereof formed as said input end surface, and the other end surface formed as a first transition end surface, said second matching material having one end surface thereof formed as said output end surface, and the other end surface formed as a second transition end surface for close contact with said first transition end surface, said first transition end surface having an acoustic impedance matched to an acoustic impedance of said second transition end surface.

7. A focus type longitudinal wave ultrasonic probe for polymer material inspection as defined in claim 6, characterized in that said second matching material is attachable to and detachable from said first matching material.

8. In a flaw evaluating apparatus for an ultrasonic flaw detecting apparatus for transmitting ultrasonic wave to a polymer material acting as a test object, and receiving echoes returning therefrom;
the flaw evaluating apparatus for an ultrasonic flaw detection apparatus is characterized by comprising a first gate circuit for generating a first gate for an echo from a predetermined reflection source in said test object, a second gate circuit for generating a second gate for flaw detection in a position of a predetermined time delay from said first echo, a first evaluating circuit for determining that a flaw has been detected when an amplitude of said first echo exceeds a predetermined level, and a second evaluating circuit for determining that a flaw has been detected when an echo occurs at said second gate.

9. A flaw evaluating apparatus as defined in claim 8, characterized in that said second gate circuit is operable to vary an interval time between said first echo and said second gate following a variation in sound velocity in said test object.

10. A flaw evaluating apparatus for an ultrasonic flaw detection apparatus as defined in claim 8, characterized in tat said first gate circuit is operable to vary an interval time between a surface echo and said first gate following a variation in sound velocity in said test object.

11. A flaw evaluating apparatus for an ultrasonic flaw detection apparatus as defined in claim 9 or 10, characterized in that said variation in sound velocity in said test object is determined by measuring an interval time between echoes from two predetermined reflection sources in said test object.
